**Europäisches Patentamt**

**European Patent Office**

**Office européen des brevets**

(19)

(11) Veröffentlichungsnummer: **0 299 182 B1**

(12) # EUROPÄISCHE PATENTSCHRIFT

(45) Veröffentlichungstag der Patentschrift:
10.07.91 Patentblatt 91/28

(51) Int. Cl.⁵: **B29C 65/20**

(21) Anmeldenummer: **88108462.8**

(22) Anmeldetag: **27.05.88**

(54) **Verfahren zum Verschweissen von Rohrenden mit einem Rohrboden.**

(30) Priorität: **15.07.87 DE 3723317**

(43) Veröffentlichungstag der Anmeldung:
**18.01.89 Patentblatt 89/03**

(45) Bekanntmachung des Hinweises auf die
Patenterteilung:
**10.07.91 Patentblatt 91/28**

(84) Benannte Vertragsstaaten:
**AT BE CH DE ES FR GB IT LI LU NL**

(56) Entgegenhaltungen:
**CH-A- 457 819**
**DE-A- 2 159 930**
**US-A- 4 430 142**

(73) Patentinhaber: **Akzo N.V.**
**Postbus 9300 Velperweg 76**
**NL-6800 SB Arnhem (NL)**

(72) Erfinder: **Garske, Friedrich**
**Winterbergstrasse 81**
**W-5600 Wuppertal 2 (DE)**
Erfinder: **Kraft, Bernd**
**Westfalenweg 286**
**W-5600 Wuppertal 1 (DE)**

(74) Vertreter: **Fett, Günter**
**Akzo Patente GmbH Kasinostrasse 19 - 23**
**W-5600 Wuppertal 1 (DE)**

## Beschreibung

Die Erfindung betrifft ein Verfahren zum Verschweißen von Rohrenden aus synthetischen Polymeren mit einem Rohrboden aus einem synthetischen Polymeren, bei dem die Rohrenden in Bohrungen des Rohrbodens derart eingeführt werden, daß sie den Rohrboden geringfügig überragen, die Rohrenden bei Schweißtemperatur verformt und dann mit dem Rohrboden stirnflächenseitig verschweißt werden.

Ein derartiges Verfahren ist aus HLH 24 (1973) Nr. 8, Seiten 248 bis 253, insbesondere Seite 249/250, als Heizstempelschweißverfahren bekannt geworden. Dieses bekannte Verfahren wird zur Herstellung von Rohrbündelwärmeaustauschern aus Kunststoff angewandt. Zur Herstellung der Schweißstelle zwischen sehr dünnwandigen Rohren und einem dicken Rohrboden werden zwei Werkzeuge benötigt, wobei mit dem ersten Werkzeug der Bereich der zukünftigen Schweißstelle erhitzt wird und mit dem zweiten Werkzeug die eigentliche Schweißung durchgeführt wird. Beide Werkzeuge sind ihrem Zweck entsprechend speziell geformt. Das bekannte Verfahren wird derart durchgeführt, daß zunächst das überstehende Rohrende über Wärmestrahlung auf Schweißtemperatur gebracht wird und dann mit dem zweiten Schweißwerkzeug derart umgeformt wird, daß die eigentliche Verschweißung zwischen Rohr und Rohrboden auf der Stirnfläche des Rohrbodens erfolgt.

Dieses bekannte Heizstempelschweißverfahren ist nicht anwendbar, wenn poröse Rohre mit einem Rohrboden verschweißt werden sollen. Solche porösen Rohre weisen ein Porenvolumen von mindestens 20% des Wandvolumens auf. Das Porenvolumen kann bis zu 90% des Wandvolumens der Rohre betragen. Derartige poröse Rohre sind sehr schwierig zu verschweißen, weil der Anteil an festem Material in der Wand der Rohre gering ist, wodurch die Rohre schon bei geringer Wärmezufuhr schmelzen. Beim Schmelzen poröser Rohrenden ergibt sich weiterhin, daß das Volumen der Schmelze um den Porenvolumenanteil verringert ist gegenüber dem Volumen der porösen Rohrwände. Dies führt zwangsläufig zu einem Fließen des Röhrenwerkstoffes, sodaß bei Anwendung des bekannten Heizstempelschweißverfahrens schon beim ersten Erhitzen der Röhrenwerkstoff nach innen in die Röhre wegfließt.

Es ist deshalb Aufgabe der vorliegenden Erfindung, ein Verfahren der eingangs genannten Art bzw. ein Heizstempelschweißverfahren zur Verfügung zu stellen, mit dessen Hilfe es möglich ist, poröse Rohrenden aus synthetischen Polymeren mit einem Rohrboden aus synthetischen Polymeren zu verschweißen. Auch soll auf eine möglichst wirtschaftliche Ausnutzung der zum Schweißen verwendeten Wärmeenergie geachtet werden.

Diese Aufgabe wird bei einem gattungsgemäßen Verfahren dadurch gelöst, daß poröse Rohrenden verschweißt werden, daß zunächst nur die Rohrenden zu Schmelze erschmolzen werden, daß die Schmelze derart radial nach außen geführt wird, daß die Schmelze teilweise auf der Stirnseite des Rohrbodens aufliegt und teilweise mit dem noch nicht erschmolzenen porösen Rohrende in Verbindung bleibt, daß dann unter Gewährleistung des Schmelzezustandes des Rohrendes durch ringförmige Erhitzung des Rohrbodens in dem Umfangsbereich, in dem die Schmelze des Rohrendes auf dem Rohrboden aufliegt, eine Verschweißung zwischen Rohrende und Rohrboden erwirkt wird.

Das erfindungsgemäße Verfahren kann mit Hilfe eines speziell geformten Werkzeuges durchgeführt werden. Das Werkzeug sollte auf jeden Fall keinen in das Rohrende hineinragenden Dorn besitzen, weil auf diese Weise, schon infolge von Wärmestrahlung, das Rohrende von innen anschmilzt und zu fließen beginnt, sodaß eine feste Verbindung zwischen Rohrende und Rohrboden nicht mehr erreicht werden kann. Außerdem muß die Berührfläche des Werkzeuges derart gestaltet sein, daß ein Großteil der aus dem Rohrende erschmolzenen Schmelze direkt nach außen abgeführt wird, so daß ein Hineinfließen der Schmelze in das Rohrende wirksam vermieden wird. Erst wenn eine genügende Menge an Schmelze mit Hilfe des Werkzeuges auf die Stirnfläche des Rohrbodens verlagert wurde, darf das Werkzeug auch in den Rohrboden eingreifen, um auch diesen im Bereich der Schmelze zu erschmelzen, wodurch dann letztendlich die Schweißstelle erreicht wird.

Das erfindungsgemäße Verfahren gelingt vorzüglich, wenn die zur Durchführung des Verfahrens erforderliche Wärmemenge diskontinuierlich zugeführt wird. Dies kann in einfacher Weise derart bewerkstelligt werden, daß das Rohrende mit Hilfe des Schweißwerkzeuges angeschmolzen und der größere Teil der Schmelze radial nach außen geführt wird. Danach wird das Schweißwerkzeug kurzfristig abgehoben, sodaß überschüssige Wärmemengen im Schmelzewerkstoff über die Umgebungsluft wieder abgeführt werden. Anschließend wird mit demselben Schweißwerkzeug die Schmelze weiter radial nach außen geschoben, wonach das Schweißwerkzeug wieder abgehoben wird. Beim dritten Auffahren des Schweißwerkzeuges kann beispielsweise bereits der Rohrboden miterschmolzen werden, um die Verschweißung zwischen Rohrende und Rohrboden zu vervollständigen.

Die nach dem erfindungsgemäßen hergestellten Schweißverbindungen zwischen porösen Rohrenden und Rohrboden weisen eine Festigkeit auf, die größer ist als die Festigkeit der Rohre selbst.

Bevorzugt wird das Rohrende zumindest zeitweise gekühlt. Durch die Kühlung der Rohrenden, welche zweckmäßigerweise von innen heraus durchgeführt wird, können die Schweißpausen bei der diskontinuierlichen Wärmezufuhr erheblich reduziert werden.

Häufig genügt es, zur Kühlung des Rohrendes, wenn in das Rohrende ein Metallstift eingeführt wird, wobei der Metallstift bevorzugt in Kontakt mit der Innenwand des porösen Rohrendes ist. Wird ein solcher Metallstift konisch ausgebildet, so kann er in das im Rohrboden befindliche Rohrende unter leichtem Druck eingeführt werden, wodurch der Metallstift infolge seiner konischen Form eine Verspannung des Rohrendes im Rohrboden erwirkt, sodaß das Rohrende im Rohrboden bei der Durchführung des erfindungsgemäßen Verfahrens sicher fixiert ist.

Als besonders vorteilhaft hat es sich herausgestellt, wenn die Rohrenden derart in den Rohrboden eingeführt werden, daß sie den Rohrboden um einen Betrag a überragen, wobei a der 1- bis 4-fachen Wandstärke der Rohrenden entspricht. Ebenfalls hat es sich als günstig herausgestellt, wenn die Schmelze der Rohrenden derart radial nach außen geführt wird, daß die Schmelze in einer Breite b auf der Stirnseite des Rohrbodens aufliegt, wobei b etwa der 0,5- bis 2-fachen Wandstärke der Rohrenden entspricht.

Unter den Begriff Rohre sind im Sinne der Erfindung zusammengefaßt alle rohrförmigen Körper, wie beispielsweise Rohre, Schläuche oder Hohlfäden. Die Querschnittsform der Rohre ist nicht auf kreisförmige Querschnitte beschränkt; die Rohre können auch elliptischen oder vieleckigen, beispielsweise dreieckigen, viereckigen, quadratischen, fünfeckigen usw. Querschnitt aufweisen. Die Wandstärke der Rohre, die sich aufgrund des Außen- und Innenquerschnitts der Rohr ergibt, kann über den Umfang der Rohre gleich oder unterschiedlich sein. Der Außen- und Innenquerschnitt der Rohre können dieselbe oder verschiedene Querschnittsform aufweisen. Beispielsweise kann ein Rohr im Außenquerschnitt eine vieleckige Kontur und im Innenquerschnitt eine kreisförmige oder elliptische Kontur aufweisen. Auch kann der Innenquerschnitt der Rohre einen oder mehrere durchgehende Hohlräume aufweisen.

Als Werkstoffe für die Rohrenden und den Rohrboden eignen sich alle synthetische Polymere, die durch Wärmezufuhr anschmelzbar sind. Zu diesen Polymeren gehören vor allen Dingen die thermoplastischen Polymere, wie beispielsweise die Flourpolymere, Polyäthylene oder Polypropylene. Hierbei ist es zweckmäßig, wenn Röhrenwerkstoff und Rohrbodenwerkstoff denselben oder nahezu denselben Schmelzpunkt bzw. Schmelzbereich aufweisen. Besonders günstig ist es, wenn die Rohrenden und der Rohrboden aus thermoplastischen Polymeren besteht, die von ihrer Grundstruktur zu derselben Polymersorte gehören.

Da das erfindungsgemäße Verfahren geeignet ist, besonders belastungsfähige Schweißstellen zwischen porösen Rohren und Rohrboden herzustellen, wird das erfindungsgemäße Verfahren bevorzugt verwendet zur Herstellung von Mikrofiltern, Filtern, Dialysatoren, Blutoxygenatoren, od. dgl.

Die Erfindung wird anhand der nachfolgenden Figuren näher erläutert.

Es zeigen :

Figur 1    einen schematischen Aufbau eines nach dem erfindungsgemäßen Verfahren hergestellten Mikrofilters im Querschnitt,

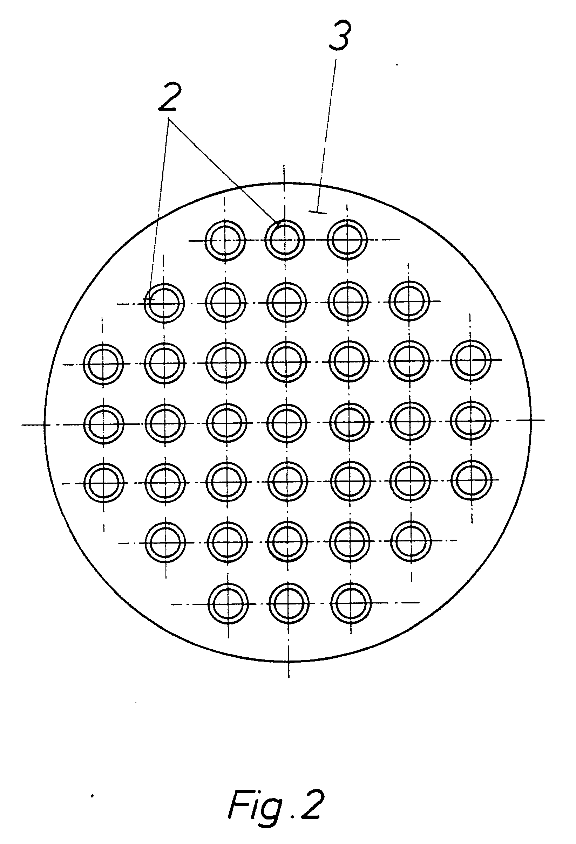

Figur 2    den Mikrofilter gemäß Figur 1 in Draufsicht,

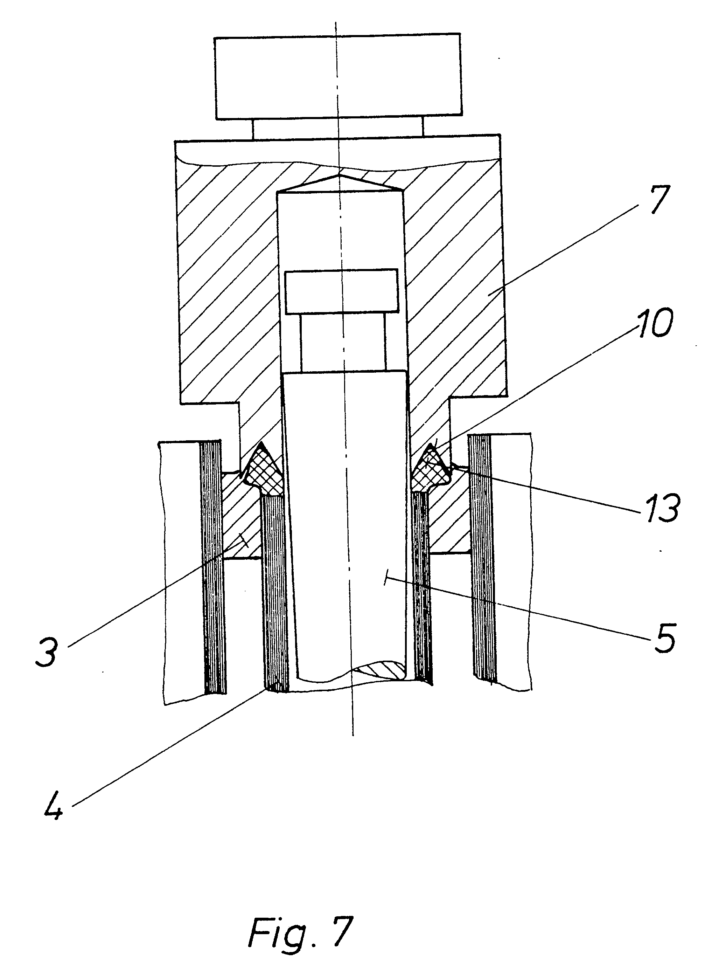

Figur 3
bis
Figur 7    den zeitlichen Ablauf des erfindungsgemäßen Verfahrens an einer Schweißstelle,

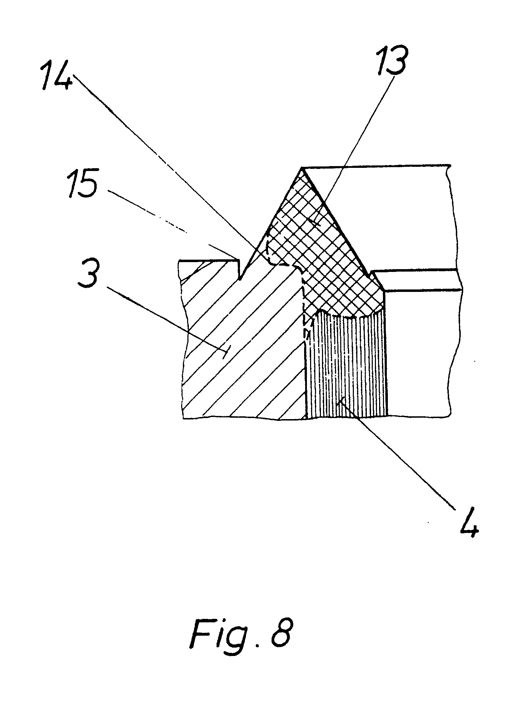

Figur 8    einen vergrößerten Teilausschnitt einer erfindungsgemäß hergestellten Schweißnaht.

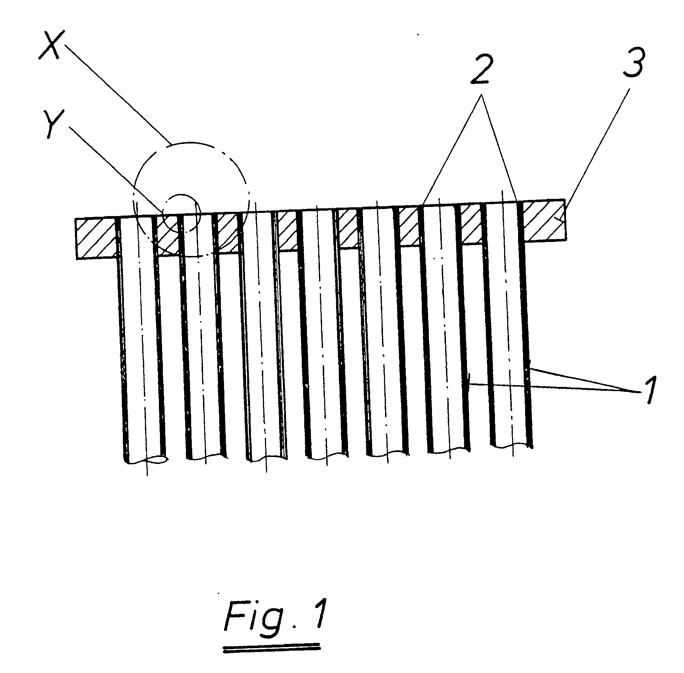

In Figur 1 sind die Rohre mit 1 bezeichnet, welche mit ihren Rohrenden 2 in den Rohrboden 3 eingeführt sind und mit diesem in nicht dargestellter Weise verschweißt sind. Anhand des Ausschnittes x soll im Nachfolgenden das erfindungsgemäße Verfahren näher erläutert werden.

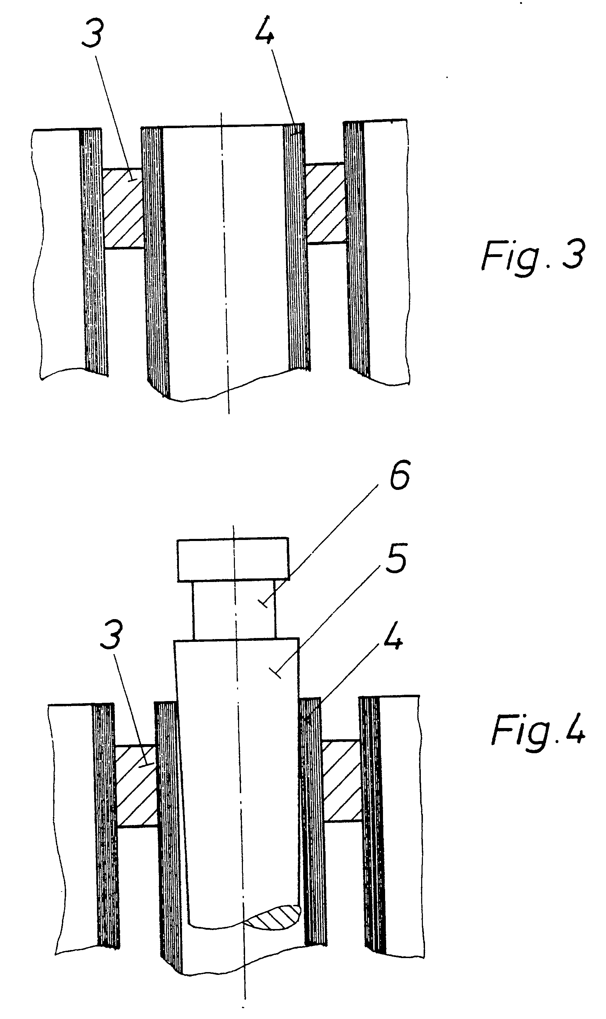

In Figur 3 ist der Rohrboden mit 3 und die Rohrenden mit 4 bezeichnet, wobei die Rohrenden 4 den Rohrboden 3 um etwa zwei Wandstärken überragen. Es hat sich als vorteilhaft herausgestellt, wenn zur Fixierung der Rohrenden 4 ein konischer Stift von außen eingeführt wird, wodurch das Rohrende 4 im Rohrboden 3 verspannt wird. Der konische Metallstift 5 ist mit einem Absatz 6 versehen, der das Herausziehen des Stiftes 5 nach erfolgter Verschweißung erleichtert (Figur 4).

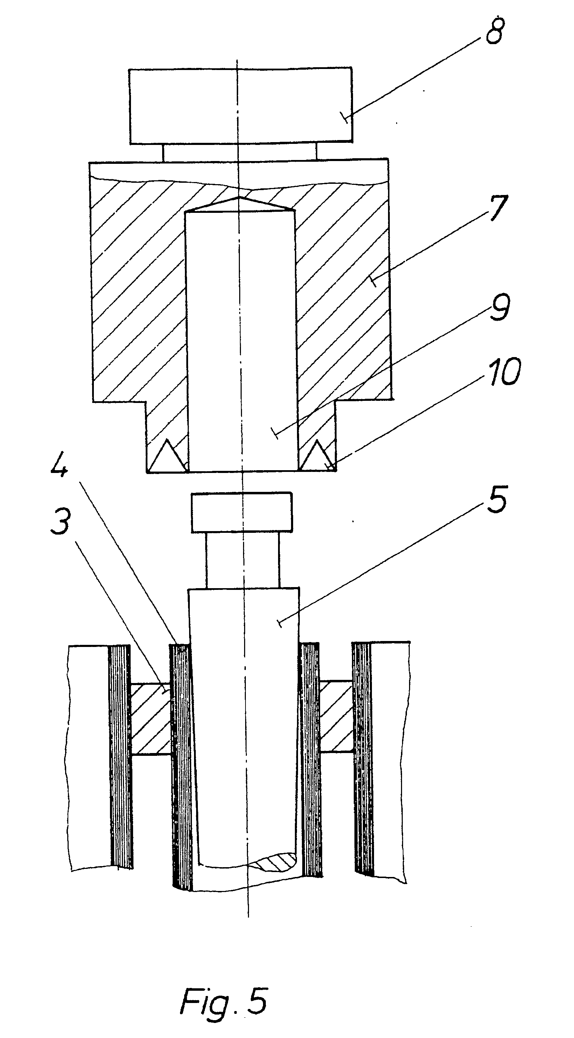

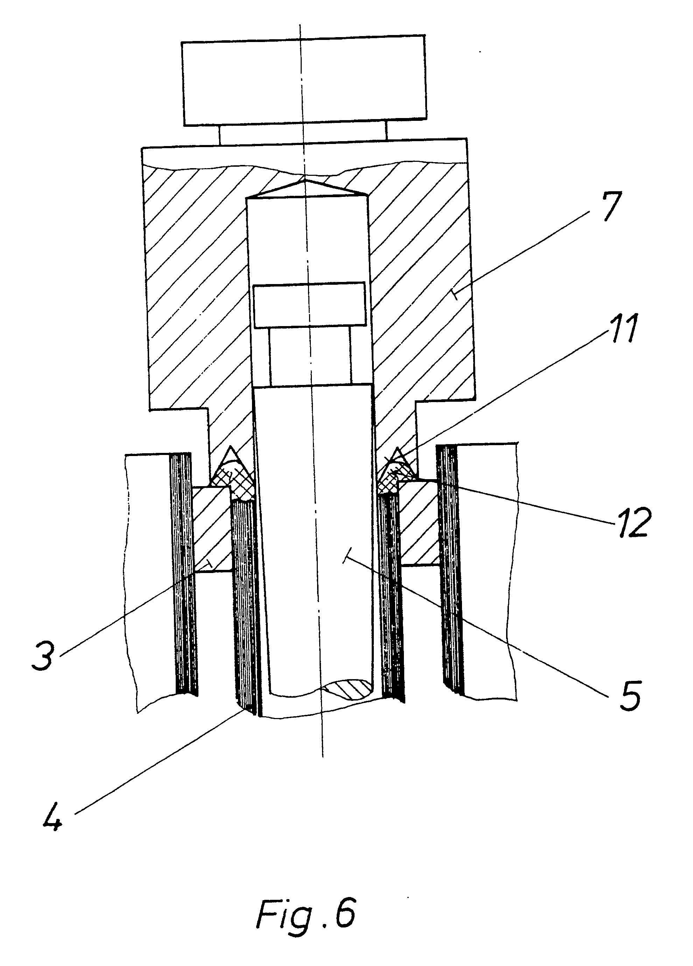

In Figur 5 ist oberhalb des zu verschweißenden Rohrendes 4 ein Schweißwerkzeug 7 dargestellt, welches über seine Halterung 8 in einem nicht dargestellten Heizwerkzeug eingespannt werden kann. Dieses Schweißwerkzeug 7 besteht bevorzugt aus einem gut wärmeleitenden Metall, welches an den Stellen, an denen es mit den Röhren- bzw. Rohrbodenwerkstoff in Berührung kommt, mit einer die Haftung verhindernden Beschichtung versehen sein kann. Das Schweißwerkzeug weist auf seiner Unterseite eine umlaufende Nut 10 auf, mit welcher die erfindungsgemäße Verschweißung besonders günstig gelingt. Im vorliegenden Fall ist diese umlaufende Nut 10 V-förmig dargestellt. Es kommen aber auch andere Querschnittsformen infrage. Die genaue Querschnittsform hängt von den verwendeten Materialien für Rohrenden und Rohrboden ab und kann jeweils durch einfache Versuche optimiert werden. Das Werkzeug 7 wird nunmehr auf die zu verschweißende Stelle abgesenkt, wodurch zunächst das Rohrende von innen her erschmolzen wird und durch die spezielle Formung der Nut 10 nach außen gedrückt und auf den Rohrboden abgelegt wird. Dieser Zustand ist in Figur 6 verdeutlicht, wobei der Schmelzebereich mit 12 bezeichnet wurde. Zur Verlagerung der Schmelze 12 wurde die Flanke 11 der Nut 10 eingesetzt. Wird nun das Schweißwerkzeug weiter abgesenkt, so erreicht der äußere Ring der Nut 10 den Rohrboden, wodurch auch dieser angeschmolzen wird und die Schmelzen 13 zur eigentlichen Schweißnaht geformt werden (Figur 7).

In Figur 8 ist eine Schweißnaht vergrößert dargestellt (Einzelheit y gemäß Figur 1). In dieser Figur ist wiederum der Rohrboden mit 3 und das poröse Rohrende mit 4 bezeichnet.

Die Schweißstelle 13 weist nach außen hin die Kontur des verwendeten Schweißwerkzeuges auf, wobei im Bereich der gestrichelten Linie 14 der Bereich der innigen Verschmelzung zwischen Rohrboden- und Röhrenwerkstoff zu finden ist. Der für die (separate) Erhitzung des Rohrbodens erforderliche Eingriff des Schweißwerkzeuges in den Rohrboden ergibt eine für das erfindungsgemäße Verfahren typische umlaufende Kerbe 15 am Außenring der Schweißnaht 13.

## Patentansprüche

1. Verfahren zum Verschweißen von Rohrenden aus synthetischen Polymeren mit einem Rohrboden aus einem synthetischen Polymeren, bei dem die Rohrenden in Bohrungen des Rohrbodens derart eingeführt werden, daß sie den Rohrboden geringfügig überragen, die Rohrenden bei Schweißtemperatur verformt und dann mit dem Rohrboden stirnflächenseitig verschweißt werden, dadurch gekennzeichnet, daß poröse Rohrenden verschweißt werden, daß zunächst nur die Rohrenden zu Schmelze erschmolzen werden, daß die Schmelze derart radial nach außen geführt wird, daß die Schmelze teilweise auf der Stirnseite des Rohrbodens aufliegt und teilweise mit dem noch nicht erschmolzenen porösen Rohrende in Verbindung bleibt, daß dann unter Gewährleistung des Schmelzezustandes des Rohrendes durch ringförmige Erhitzung des Rohrbodens in dem Umfangsbereich, in dem die Schmelze des Rohrendes auf dem Rohrboden aufliegt, eine Verschweißung zwischen Rohrende und Rohrboden erwirkt wird.

2. Verfahren nach Anspruch 1, dadurch gekennzeichnet, daß die zur Durchführung des Verfahrens erforderliche Wärmemenge diskontinuierlich zugeführt wird.

3. Verfahren nach Anspruch 1 oder 2, dadurch gekennzeichnet, daß das Rohrende zumindest zeitweise gekühlt wird.

4. Verfahren nach Anspruch 3, dadurch gekennzeichnet, daß zur Durchführung des Verfahrens ein Metallstift in das Rohrende eingeführt wird.

5. Verfahren nach einem oder mehreren der Ansprüche 1 bis 4, dadurch gekennzeichnet, daß die Rohrenden derart in den Rohrboden eingeführt werden, daß sie den Rohrboden um einen Betrag a überragen, wobei a der 1- bis 4-fachen Wandstärke der Rohrenden entspricht.

6. Verfahren nach einem oder mehreren der Ansprüche 1 bis 5, dadurch gekennzeichnet, daß die Schmelze der Rohrenden derart radial nach außen geführt wird, daß die Schmelze in einer Breite b auf der Stirnseite des Rohrbodens aufliegt, wobei b etwa der 0,5-bis 2-fachen Wandstärke der Rohrenden entspricht.

## Claims

1. A method for welding tube ends made of synthetic polymers with a tube base made of a synthetic polymer, wherein the tube ends are introduced into bores in the tube base in such a manner that the tube ends project slightly above the tube base, the tube ends are deformed at welding temperature and then welded onto the end face of the tube base, characterised in that porous tube ends are welded, only the tube ends are firstly melted to form a melt, the melt is guided radially outwards in such a manner that the melt partially rests upon the end face of the tube base and partially remains in connection with the not yet molten porous tube end, and a welding is then effected between the tube end and tube base whilst ensuring the molten state of the tube end by annular heating of the tube base in the circumferential region, in which the melt of the tube end rests upon the tube base.

2. A method according to claim 1, characterised in that the quantity of heat required for carrying out the method is supplied intermittently.

3. A method according to claim 1 or 2, characterised in that the tube end is cooled at least periodically.

4. A method according to claim 3, characterised in that in order to carry out the method a metal rod is introduced into the tube end.

5. A method according to one or more of claims 1 to 4, characterised in that the tube ends are introduced into the tube base in such a manner that they project above the tube base by a distance a, wherein a corresponds to 1 to 4 times the wall thickness of the tube ends.

6. A method according to one or more of claims 1 to 5, characterised in that the melt of the tube ends is guided radially outwards in such a manner that the melt rests on the end face of the tube base over a width *b*, wherein *b* corresponds approximately to 0.5 to 2 times the wall thickness of the tube ends.

## Revendications

1. Procédé pour le soudage des extrémités de tubes en polymère synthétique sur une plaque tubulaire en polymère synthétique dans lequel les extrémités des tubes sont introduites dans des perçages de la plaque tubulaire de manière telle qu'elles dépassent légèrement de la plaque tubulaire, les extrémités des tubes sont déformées à la température de soudage puis soudées côté face frontale avec la plaque tubulaire, caractérisé en ce qu'on soude des extrémités de tubes poreuses, qu'on amène dans un premier temps seulement les extrémités de tubes à l'état de masse fondue, que la masse fondue est refoulée radialement vers l'extérieur de manière telle que la masse fondue repose en partie sur la face frontale de la plaque tubulaire et reste en partie en liaison avec l'extrémité de tube poreux non encore fondue, que, l'extrémité du tube étant maintenue à l'état fondu, la soudure entre l'extrémité de tube et la plaque tubulaire est réalisée par chauffage annulaire de la plaque tubulaire dans la région périphérique dans laquelle la masse fondue de l'extrémité du tube est en contact avec la plaque tubulaire.

2. Procédé selon la revendication 1, caractérisé en ce que la quantité de chaleur nécessaire à la mise en oeuvre du procédé est amenée de manière discontinue.

3. Procédé selon la revendication 1 ou 2, caractérisé en ce que l'extrémité du tube est au moins temporairement refroidie.

4. Procédé selon la revendication 3, caractérisé en ce que, pour la mise en oeuvre du procédé, un mandrin de métal est introduit dans l'extrémité du tube.

5. Procédé selon l'une ou plusieurs des revendications 1 à 4, caractérisé en ce que les extrémités des tubes sont introduites dans la plaque tubulaire de manière telle qu'elles dépassent de la plaque tubulaire d'une valeur a, a étant égale à 1 à 4 fois l'épaisseur de paroi des extrémités de tubes.

6. Procédé selon l'une ou plusieurs des revendications 1 à 5, caractérisé en ce que la masse fondue des extrémités de tubes est refoulée radialement vers l'extérieur, que la masse fondue repose sur la face frontale de la plaque tubulaire sur une largeur b, b étant égale à environ 0,5 à 2 fois l'épaisseur de paroi des extrémités de tubes.

Fig. 1

6

Fig.2

Fig. 3

Fig. 4

*Fig. 5*

Fig .6

7

10

13

5

3

4

Fig. 7

*Fig. 8*